# NEUE EUROPÄISCHE PATENTSCHRIFT

(11) **EP 0 715 396 B2**
(45) Veröffentlichungstag und Bekanntmachung des Hinweises auf die Entscheidung über den Einspruch: **04.12.2002**
(45) Hinweis auf die Patenterteilung: 18.08.1999
(21) Anmeldenummer: 95107975.5
(22) Anmeldetag: 26.05.1995
(51) Int. Cl.: H02K 11/04, H02K 29/00

(54) **Elektronisch gesteuerter Elektromotor, insbesondere mit einem Lüfterrad zum Ansaugen von Kühlluft für Kraftfahrzeuge**
Electronically commutated motor, in particular for a fan drawing cooling air for automotive vehicles
Moteur à commutation électronique, notamment pour un ventilateur pour aspirer l'air de refroidissement pour véhicules automobiles

(43) Veröffentlichungstag der Anmeldung: 05.06.1996
(73) Patentinhaber: FHP Motors GmbH, 26133 Oldenburg (DE)
(72) Erfinder: Altmann, Manfred. Dipl.-Ing., D-26133 Oldenburg (DE); Tillner, Siegfried, Dipl.-Ing., 26125 Oldenburg (DE); Oltmanns, Karl-Heinz, Dipl.-Ing., D-26123 Oldenburg (DE)
(74) Vertreter: Jabbusch, Matthias

(56) Entgegenhaltungen:
- EP-A- 0 345 796
- EP-A- 0 376 530
- EP-B- 0 488 961
- DE-A- 3 842 588
- DE-A- 3 939 738
- DE-A- 4 122 529
- DE-C- 3 404 466
- DE-C- 3 638 393
- DE-C- 4 108 074
- US-A- 4 306 419
- US-A- 4 554 473
- US-A- 4 658 312
- US-A- 4 668 898
- US-A- 4 682 065

## Beschreibung

Die Erfindung betrifft einen elektronisch gesteuerten Elektromotor, insbesondere mit einem Lüftterrad zum Ansaugen von Kühlluft für Kraftfahrzeuge der im Oberbegriff des Patentanspruchs 1 angegebenen Art. Ein derartiger Elektromotor ist aus der EP 0376 530 bekannt.

Für die Kühlung von Verbrennungsmotoren werden aufgrund der Optimierung der C -Werte Lüfterräder mit bestimmten Durchmessern gefordert. Diese Einengung gilt auch für Kondensatorgebläse, die vor dem eigentlichen Kühler und Kondensator der Klimaanlage angeordnet werden. Daher besteht die Forderung nach kurzbauenden kompakten Elektrolüftern, wobei aus Geräusch- und Leistungsgründen auch eine Drehzahlverstellung gewünscht wird. Hierfür eignet sich insbesondere ein konventioneller bürstenbehafteter Elektromotor mit einem elektronischen Schaftnetzteil oder auch ein bürstenloser Motor mit entsprechender Leistungselektronik.

Aus Entstörgründen muß die Elektronik möglichst dicht am Motor liegen, da die kurzen Leitungen weniger Störenergie abstrahlen. Andererseits muß aber eine direkte Wärmeübertragung von dem Motor zur Elektronik hin vermieden werden. Zu diesem Zweck ist gemäß US-PS 4,668,898 die Elektronik in einem eigenen Regelgehäuse angeordnet, das über Stelzen mit dem Motorgehäuse verbunden ist. Dieser elektronisch kommutierte Motor ist für einen kompakten Lüfter zur Kühlung von Verbrennungsmotoren nicht geeignet.

Weiterhin ist durch die DE-OS 38 20 857 ein Elektromotor mit einem Außenläufer und einem mit diesem verbundenen Lufterrad bekannt, wobei der Elektromotor als Gleichstrommotor mit elektronischer Kommutierung ausgebildet ist. Hierbei sind die elektronischen Bauteile auf einer Leiterplatte angeordnet, welche an einem Lüftergehäuse mit Kühlrippen befestigt ist. Dieser elektronisch gesteuerte Gleichstrommotor ist zum Kühlen von Kondensatoren und/oder von Kühlern in Kraftfahrzeugen nicht einsetzbar.

Aus DE-A-41 22 529 ist ein elektronisch kommutierter Antriebsmotor für den Kraftfahrzeugsektor bekannt, mit dem Einrichtungen in Kraftfahrzeugen angetrieben werden können. Die Steuerelektronik für die Kommutierung ist auf einer Leiterplatte angeordnet, die an einem Träger an einem Wicklungen tragenden Stator angebracht ist. Eine besonders rasche Abfuhr der durch die Kommutierung entstehenden Wärme wird dadurch erreicht, daß der Träger eine Ringwand aufweist, welche die Wand des Rotors bis in den Bereich der Permanentmagneten übergreift.

Aus US-A-4.682.065 ist ein Lüfterrad an einem Elektromotor bekannt, dessen Lüfterflügel das zylindrische Motorgehäuse zumindest auf einem Teil seiner axialen Länge übergreifen.

Aus DE-A-38 42 588 ist ein kollektorloser Aussenläufermotor mit Halbleiter-Kühlungsanordnung bekannt. An der elektronische Bauelemente tragenden Leiterplatte sind mehrere Leistungshalbleiter angebracht, die mittelbar über einen ringscheibenförmigen Kühlkörper mit dem Motorflansch wärmeleitend verbunden sind. Der Kühlkörper bildet mit der Leiterplatte und einem die Leiterplatte haltenden Trägerelement eine vormontierte Baugruppe.

Der Erfindung liegt die Aufgabe zugrunde, einen elektronisch gesteuerten Elektromotor, insbesondere mit einem Lüfterrad zum Ansaugen von Kühlluft in Kraftfahrzeugen hinsichtlich der Herstellung, Montage- und Wartungsfreundlichkeit sowie hinsichtlich der thermischen Verhältnisse bei kompaktem Aufbau zu verbessern. Diese Aufgabe wird durch die im Patentanspruch 1 enthaltenen Merkmale gelöst.

Der erfindungsgemäße gesteuerte Elektromotor, insbesondere mit einem Lüfterrad zum Ansaugen von Kühlluft durch Kondensatoren oder Kühler in Kraftfahrzeugen hat ein eigenes Gehäuse für die Steuerelektronik, wodurch die Herstellung, Montage und Wartung des Elektromotors vereinfacht werden. Der durch das Lüfterrad erzeugte Kühlluftstrom dient teilweise gleichzeitig zur Kühlung des Motors und des Reglergehäuses.

Weitere vorteilhafte Ausgestaltungen des Erfindungsgegenstandes sind den weiteren Unteransprüchen zu entnehmen.

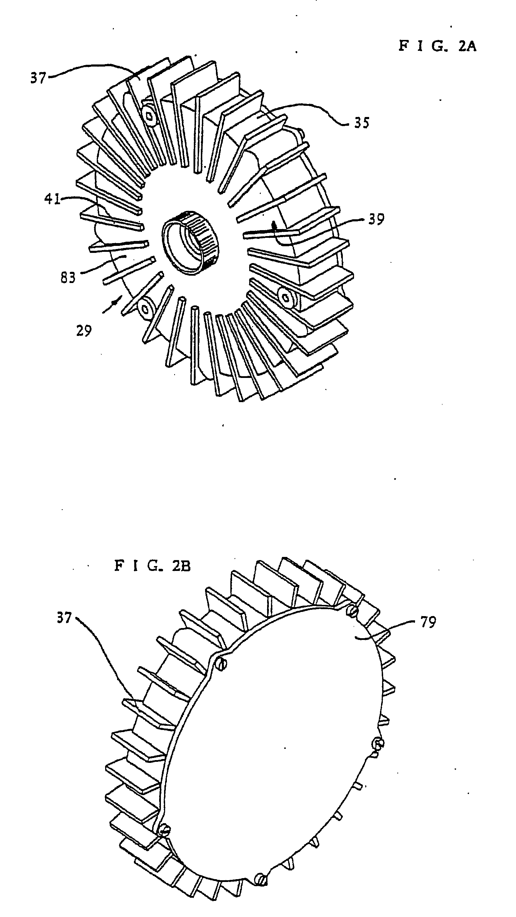

Die Erfindung wird in Fig. 1 bis 3 und 8 und 9 anhand von Ausführungsbeispielen im folgenden näher beschrieben. Es zeigen:
- Figur 1: einen Elektromotor mit einem Lüfterrad im Querschnitt,
- Figur 2: eine schaubildliche Darstellung des Reglergehäuses von dem Zwischenraum aus gesehen,
- Figur 3: eine Draufsicht auf den Deckel des Reglergehäuses,
- Figur 4: ein bürstenloser Gleichstrommotor als Außenläufer mit einem Lüfterrad,

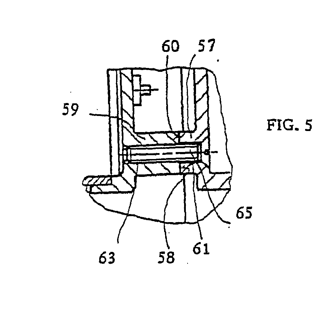

- Figur 5: entsprechend Figur 4 mit einer zusätzlichen Riemenscheibe
- Figur 6: entsprechend Figur 4 mit einer abgeänderten Lüfternabe,
- Figur 7: entsprechend Figur 4 mit einer abgeänderten Halterung für das Ständerpaket,
- Figuren 8 und 9: betreffen Einzelheiten aus Figur 1.

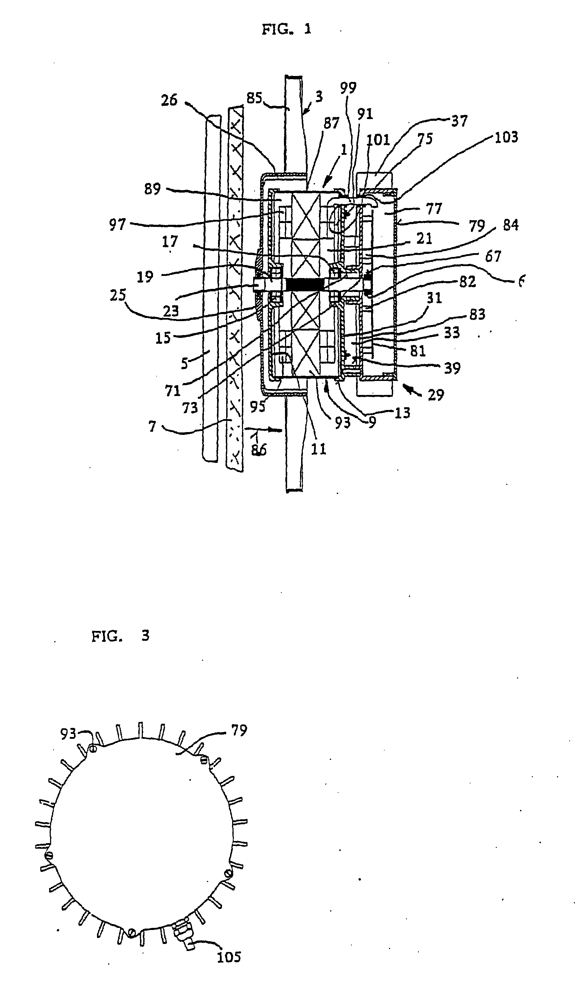

Die Figur 1 zeigt einen kompakt ausgebildeten, elektronisch gesteuerten Elektromotor 1, insbesondere mit einem Lüfterrad 3 zum Ansaugen von Kühlluft durch einen Kondensator 5 bzw. Kühler 7 in Kraftfahrzeugen. Hierbei ist ein zylinderförmig ausgebildetes Motorgehäuse 9 vorgesehen, dessen Stirnflächen 89, 91 durch je ein Lagerschild 11, 13 verschlossen sind. Die beiden Lagerschilde 11, 13 weisen je ein Lager 15, 17, welche z.B. aus Kugellagern bestehen, für eine Rotorwelle 19 eines Rotors 21 auf. Die Rotorwelle 19 hat ein erstes aus dem Motorgehäuse 9 herausragendes freies Ende 23, auf dem die Lüfternabe 25 des Lüfterrades 3 fest angeordnet ist. Das andere freie Ende 27 der Rotorwelle 19 ragt In ein Regiergehäuse 29 hinein, welches vor der Stirnseite 31 des Lagerschildes 13 über verbindbare Abstandselemente mit dem Motorgehäuse 9 derart verbunden ist, daß zwischen dem Motorgehäuse 9 und dem Reglergehäuse 29 ein Luftzwischenraum 33 angeordnet ist. Das Reglergehäuse 29 setzt das Motorgehäuse 9 axial fort und ist mit mindestens an dessen Außenumfangsfläche 35 in Strömungsrichtung des durch das Lüfterrad 3 erzeugten Kühlluftstromes angeordneten Kühlrippen 37 versehen. Die dem Luftzwischenraum 33 zugewandte Stirnseite 39 des Reglergehäuses 29 ist mit Kühlrippen 41 versehen, welche mit den einzelnen an dem Aüßenumfang des Reglergehäuses 29 angeordneten Kühlrippen 37 in wärmeleitender Verbindung stehen. Hierdurch wird eine sehr wirkungsvolle Ableitung der in dem Reglergehäuse 29 erzeugten Wärme erzielt.

Eine einfache zentrierte Ausrichtung des Reglergehäuses 29 zu dem Motorgehäuse 9 wird dadurch erzielt, daß das dem Luftzwischenraum 33 zugewandte Lagerschild 13 einen hohlzylindrischen Lagerzapfen 43 aufweist, auf dem das Reglergehäuse 29 mit einem gegenüber der Stirnseite 39 vorstehend ausgebildeten Lagerring 45 spielfrei lagerbar ist. Um ein Eindringen von Wasser oder Schmutz in das Reglergehäuse 29 zu verhindern, weist der Lagerzapfen 43 in seiner Außenumfangsfläche 47 eine umlaufende Ausnehmung 49 zum Einrasten eines mit der Innenumfangsfläche 51 des Lagerringes 45 zusammenwirkenden Dichtungsringes 53 auf. Bel dem Aufsetzen des Reglergehäuses 29 auf den Lagerzapfen 43 wird dessen Stirnfläche 55 mit der Stirnseite 39 des Reglergehäuses 29 in Anlage gebracht. Die endgültige Befestigung des Reglergehäuses 29 an dem Motorgehäuse 9 wird dann durch Verbindungsschrauben 65 vorgenommen, welche von der Innenseite des Reglergehäuses 29 durch Durchstecklöcher 61 in dem Boden mit zu dem Luftzwischenraum 33 in angeordneten zylinderförmigen Ansätzen 57 durchsteckbar und dann in Gewindebohrungen 63 in dem Motorgehäuse einschraubbar sind. Die Gewindebohrungen 63 befinden sich in zylinderförmigen Ansätzen 59 an dem Motorgehäuse 9. Nach dem Festziehen der Verbindungsschrauben 65 liegen die Stirnflächen 58, 60 der als Abstandselemente dienenden zylindrischen Ansätze 57, 59 in Preßkontakt.

Auf dem in das Reglergehäuse 29 hineinregende Ende 27 der Rotorwelle 19 ist ein mit einem durch einen Sensor 67 abtastbaren Geberelement 69 zur Erfassung der Drehzahl oder Drehrichtung angeordnet, welcher durch Durchstecköffnungen 71, 73 in dem Lagerschild 13 des Motorgehäuses 9 und in dem Boden des Reglergehäuses 29 bei der Montage durchsteckbar sind. Diese Durchstecköffnungen 71, 73 sind konzentrisch zu dem Lagerzapfen 43 in dem Lagerschild 13 und ebenfalls konzentrisch zu dem Lagerring 45 in der Stirnseite 39 des Reglergehäuses 29 angeordnet.

Das Reglergehäuse 29 besteht aus einem topfförmigen Bodenteil 75 aus einem gut wärmeleitenden Material, deren Öffnung 77 durch einen Deckel 79 derart dicht verschlossen ist, daß keine Feuchtigkeit in das Gehäuse 29 eindringen kann. Das Bodenteil 75 ist mit den Kühlrippen 37, 41 einstückig, z.B. aus einem Druckgußteil ausgebildet. In der Nähe des Bodens 83 des Bodenteiles 75 ist eine Leiterplatte 81 angeordnet, auf welcher sich die Steuerelektronik für den Elektromotor befindet. Der Sensor 69 zum Abtasten des Gebers 67 auf der Rotorwelle 19 ist ebenfalls auf dieser Leiterplatte 81 befestigt. Die Leiterplatte 81 ist auf Stelzen 82 in dem Bodenteil 75 derart gelagert, daß ein Luftzwischenraum 84 zwischen der Leiterplatte 81 und dem Boden 83 des Bodenteils 75 zwecke besserer Wärmeableitung angeordnet ist.

Das Lüfterrad 3 ist als Axiallüfterrad ausgebildet, dessen Lüfterflügel 85 das zylindrische Motorgehäuse 9 zumindestens auf einem Teil seiner axialen Länge übergreifen und einen Kühlluftstrom in Längsrichtung des zylindrischen Gehäuseteils 87 in Pfeilrichtung 86 erzeugen. Die Stirnöffnungen 89, 91 dieses Mantelgehäuseteiles 87 sind durch Lagerschilde 11, 13 mit den Lagern 15, 17 dicht verschließbar. Das Ständerblechpaket 93 ist in dem Mantelgehäuseteil 87 fest angeordnet, wobei dessen Wicklungen 95, 97 über Verbindungskabel 99 mit der Steuerelektronik auf der Leiterplatte 81 in dem Reglergehäuse 29 verbunden sind. Das Verbindungskabel 99 ist in den Aus- bzw. Eintrittsstellen von je einer Dichtungsmanschette 101, 103 derart umgeben, daß keine Feuchtigkeit an diesen Stellen in das Motorgehäuse 9 und / oder das Reglergehäuse 29 eindringen kann.

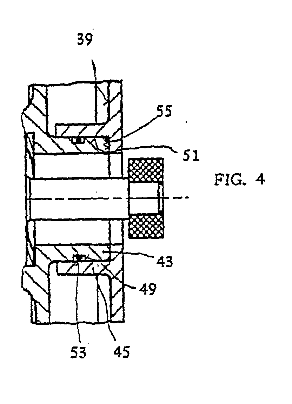

Der Lüfterzwischenraum 33 zwischen dem Motorgehäuse 9 und dem Reglergehäuse 29 gewährleiset, daß eine Übertragung der von dem Elektromotor erzeugten Wärme auf die Steuerelektronik weitgehend ausgeschlossen wird. Weiterhin wird die über die Steuerelektronik in dem Reglergehäuse 29 erzeugte Wärme Ober das mit den Kühlrippen 37, 41 versehene und aus einem gut wärmeleitenden Material bestehende Bodenteil 75 des Reglergehäuses 29 optimal abgeführt. Diese Wärmeabfuhr wird weiterhin durch den durch das Lüfterrad 3 erzeugten Kühlluftstrom begünstigt Ein zusätzlicher Kohlluftstrom kann dadurch an der Innenfläche 132 an dem Boden B9 der Lüfternabe 131 angeordnete Rippen 26 erzeugt werden, wobei dieser Kühlluftstrom über die Oberfläche des zylindrischen Mantelgehäuseteiles 87 und durch die Kühlrippen 37 streicht. Die Stromversorgung der Steuerelektronik erfolgt über ein Versorgungskabel 105, welches durch eine Kabeldurchführung in der Außenumfangsfläche 35 des Reglergehäuses 29 zu der Leiterplatte 81 gelangt, Figur 3.

Der erfindungsgemäße elektronisch gesteuerte Elektromotor gewährleistet eine einfache Herstellung, eine einfache Montage der Einzelteile und eine einfache Wartung. Weiterhin wird durch ein ohnehin vorhandenes Lüfterrad eine optimale Abfuhr der in dem Motorgehäuse und in dem Reglergehäuse entstehanden Wärme erzielt.

## Patentansprüche

1. Elektronisch gesteuerter Elektromotor, insbesondere mit einem Lüfterrad zum Ansaugen von Kühlluft für Kraftfahrzeuge, mit
einem zylindrischen Motorgehäuse (9), vor dessen einer Stirnseite ein Lüfterrad (3) angeordnet ist, und
einem an einem Lagerschild befestigten Reglergehäuse (29),
in dem eine Steuerelektronik des Elektromotors angeordnet ist,
das an der anderen Stirnseite des Motorgehäuses angeordnet ist und das Motorgehäuse axial fortsetzt und
das an der Außenfläche Kühlrippen (37) aufweist, die an der Außenumfangsfläche (35) in Strömungsrichtung des durch das Lüfterrad erzeugten Kühlluftstromes angeordnet sind,
wobei das Reglergehäuse (.29)
zur thermischen und mechanischen Entkopplung über Abstandselemente mit dem Motorgehäuse so verbunden ist, daß zwischen dem Motorgehäuse und dem Reglergehäuse ein Luftzwischenraum (33) vorhanden ist und
ein topfförmiges Bodenteil (75), das mit den Kühlrippen (37) einstückig ausgestaltet ist, aus gut wärmeleitendem Material und einen die Öffnung des Bodenteils (75) dicht verschließenden Deckel (79) aufweist, und wobei
eine die Steuerelektronik des Elektromotors tragende Leiterplatte (81) in der Nähe des Bodens (83) des Bodenteils (5) angeordnet ist,
**dadurch gekennzeichnet,**
**daß** der Boden des Bodenteils (75) des Reglergehäuses (29) dem Luftzwischenraum (33) zwischen Motorgehäuse (9) und Reglergehäuse (29) zugekehrt ist und
**daß** die dem Luftzwischenraum (33) zugewandte, durch den Boden des Bodenteils (75) gebildete Stirnseite (39) des Reglergehäuses (29) mit Kühlrippen (41) versehen ist,
welche mit den Kühlrippen (37) an der Außenumfangsfläche (35) einstückig ausgebildet sind und
deren Höhe geringer als der durch den Luftzwischenraum (33) gebildete Abstand zwischen Motorgehäuse (9) und Reglergehäuse (29) ist.

2. Elektromotor nach Anspruch 1, **dadurch gekennzeichnet, daß** das dem Luftzwischenraum (33) zugewandte Lagerschild (13) einen hohlzylindrischen Lagerzapfen (43) aufweist, auf dem das Reglergehäuse (29) mit einem gegenüber der Stirnseite (39) vorstehend ausgebildeten Lagerring (45) spielfrei lagerbar ist.

3. Elektromotor nach Anspruch 2, **dadurch gekennzeichnet, daß** der Lagerzapfen (43) in seiner Aussenumfangsfläche (47) eine umlaufende Ausnehmung (49) zum Einrasten eines mit der Innenumfangsfläche (51) des Lagerringes (45) zusammenwirkenden Dichtungsringes (53) aufweist.

4. Elektromotor nach Anspruch 2 oder 3, **dadurch gekennzeichnet, daß** die Stirnfläche (55) des Lagerzapfens (43) beim Aufschieben des Lagerringes (45) mit der Stirnseite (39) des Reglergehäuses (29) in Anlage bringbar ist.

5. Elektromotor nach einem der vorhergehenden Ansprüche, **dadurch gekennzeichnet, daß** die dem Luftzwischenraum (33) zugewandte Stirnseite (39) des Reglergehäuses (29) und das diesem (33) zugewandte Lagerschild (13) als verbindbare Abstandselemente ausgebildete zylinderförmige Ansätze (57,59) mit Durchstecklöchern (61) bzw Gewindebohrungen (63) für Verbindungsschrauben (65) aufweisen.

6. Elektromotor nach einem der vorhergehenden Ansprüche, **dadurch gekennzeichnet, daß** in dem Motorgehäuse (9) ein Rotor (21) mit einer Rotorwelle (19) drehbar gelagert ist, deren freie Enden (23, 27) beidseitig aus dem Motorgehäuse (9) herausragen, daß das Lüfterrad (3) mit einer Lüfternabe (25) auf dem einen freien Ende (23) der Rotorwelle (19) fest angeordnet ist und daß das andere freie Ende (27) der Rotorwelle (19) mit einem durch einen Sensor (67) abtastbaren Geberelement (69) zur Erfassung der Drehzahl in das Reglergehäuse (29) hineinragt.

7. Elektromotor nach Anspruch 6, **dadurch gekennzeichnet, daß** Durchstecköffnungen (71, 73) für das auf der Rotorwelle (19) angeordnete Geberelement (69) konzentrisch zu dem Lagerzapfen (43) In dem Lagerschild (13) konzentrisch zu dem Lagerring (45) in der Stirnseite (39) des Reglergehäuses (9) angeordnet sind.

8. Elektromotor nach einem der Ansprüche 1 bis 7, **dadurch gekennzeichnet, daß** der Sensor (69) zum Abtasten des Gebers (67) der Rotorwelle (19) mit auf der Leiterplatte (81) angeordnet ist.

9. Elektromotor nach einem der vorhergehenden Ansprüche, **dadurch gekennzeichnet, daß** das Lüfterrad (3) aus einem Axiallüfterrad besteht, dessen Lüfterflügel (85) das zylindrische Motorgehäuse (9) zumindest auf einem Teil seiner axialen Länge übergreifen.

10. Elektromotor nach einem der vorhergehenden Ansprüche, **dadurch gekennzeichnet, daß** das Motorgehäuse (9) aus einem zylindrischen Mantelgehäuseteil (87) besteht, dessen Stirnöffnungen (89, 91) durch je ein Lagerschild (11, 13) mit je einem Lager (15,17) für die Rotorwelle (19) dicht verschließbar sind.

## Claims

1. An electronically controlled electric motor, in particular, with a fan wheel for sucking in cooling air for motor vehicles, comprising
a cylindrical motor housing (9), in front of one end face of which a fan wheel (3) is arranged, and
a controller housing (29) that is mounted on an end plate
and in which the control electronics for the electric motor are arranged,
with the controller housing being arranged on the other end face of the motor housing and forming an axial extension of said motor housing,
and with the outer surface of the controller housing being provided with cooling fins (37) that are arranged on the outer peripheral surface (35) in the flow direction of the cooling air generated by the fan wheel,
wherein the controller housing (29)
is connected to the motor housing by means of spacers in order to realize a thermal and mechanical decoupling, namely in such away that an intermediate air space (33) is present between the motor housing and the controller housing,
wherein the controller housing contains a pot-shaped base part (75) that is realized integrally with the cooling fins (37), consists of a material with high thermal conductivity and is provided with a cover (79) that tightly seals the opening in the base part (75),
and wherein a printed circuit board (81) that supports the control electronics of the electric motor is arranged in the vicinity of the base (83) of the base part (5) [sic; (75)],
**characterized by** the fact
that the base of the base part (75) of the controller housing (29) faces the intermediate air space (33) between the motor housing (9) and the controller housing (29), and by the fact
that the end face (39) of the controller housing (29) which faces the intermediate air space (33) and is formed by the base of the base part (75) is provided with cooling fins (41)
that are realized integrally with the cooling fins (37) on the outer peripheral surface (35)
and the height of which is smaller than the gap between the motor housing (9) and the controller housing (29) which is formed by the intermediate air space (33).

2. The electric motor according to Claim 1, **characterized by** the fact that the end plate (13) which faces the intermediate air space (33) is provided with a hollow-cylindrical bearing journal (43), on which the controller housing (29) can be mounted without any play by means of a ring bearing (45) that protrudes relative to the end face (39).

3. The electric motor according to Claim 2, **characterized by** the fact that the outer peripheral surface (47) of the bearing journal (43) is provided with a circular recess (49) for accommodating a ring seal (53) that cooperates with the inner peripheral surface (51) of the ring bearing (45).

4. The electric motor according to Claim 2 or 3, **characterized by** the fact that the end face (55) of the bearing journal (43) can be brought in contact with the end face (39) of the controller housing (29) when pushing on the ring bearing (45).

5. The electric motor according to one of the preceding claims, **characterized by** the fact that the end face (39) of the controller housing (29) which faces the intermediate air space (33) and the end plate (13) which faces the latter (33) are provided with cylindrical projections (57, 59) that are realized in the form of connectable spacers and contain through-holes (61) or threaded bores (63) for connecting screws (65).

6. The electric motor according to one of the preceding claims, **characterized by** the fact that a rotor (21) with a rotor shaft (19) is rotatably mounted in the motor housing (9), wherein the free ends (23, 27) of said rotor shaft protrude from both sides of the motor housing (9), by the fact that the fan wheel (3) is rigidly arranged on one free end (23) of the rotor shaft (19) by means of a fan hub (25), and by the fact that the other free end (27) of the motor shaft (19) protrudes into the controller housing (29) with a pick-up element (69) that can be scanned by a sensor (67) and serves for determining the rotational speed.

7. The electric motor according to Claim 6, **characterized by** the fact that through-openings (71, 73) for the pick-up element (69) mounted on the rotor shaft (19) are arranged in the end face (39) of the controller housing (9) concentric referred to the bearing journal (43) in the end plate (13) and concentric referred to the ring bearing (45).

8. The electric motor according to one of Claims 1-7, **characterized by** the fact that the sensor (69) for scanning the pick-up element (67) of the rotor shaft (19) is also arranged on the printed circuit board (81).

9. The electric motor according to one of the preceding claims, **characterized by** the fact that the fan wheel (3) is realized in the form of an axial fan wheel, the fan blades (85) of which overlap the cylindrical motor housing (9) over at least part of its axial length.

10. The electric motor according to one of the preceding claims, **characterized by** the fact that the motor housing (9) consists of a cylindrical casing part (87), the end face openings (89, 91) of which can be tightly sealed by means of end plates (11, 13) that are respectively provided with a bearing (15, 17) for the rotor shaft (19).

## Revendications

1. Moteur électrique à commande électronique, en particulier avec une roue de ventilateur pour aspirer de l'air de refroidissement destiné à des véhicules automobiles, comprenant :
un boîtier moteur (9) cylindrique, devant une face frontale duquel peut être montée une roue de ventilateur (3), et
un boîtier de régulateur (29) fixé sur un flasque de palier,
dans lequel est disposée une électronique de commande du moteur électrique,
qui est disposé sur l'autre face frontale du boîtier moteur et prolonge dans le sens axial le boîtier moteur et
qui présente sur sa surface extérieure des ailettes de refroidissement (37) qui sont disposées sur la surface périphérique extérieure (35) dans le sens d'écoulement du courant d'air de refroidissement produit par la roue de ventilateur,
le boîtier de régulateur (29)
étant relié au boîtier moteur pour assurer le désaccouplement thermique et mécanique par l'intermédiaire d'éléments d'espacement de manière à ce qu'il y ait un espace intermédiaire d'air (33) entre le boîtier moteur et le boîtier de régulateur et
une partie fond (75) en forme de pot qui est configurée d'une seule pièce avec les ailettes de refroidissement (37), réalisée en matériau bon conducteur de la chaleur et présente un couvercle (79) obturant de façon étanche l'ouverture de lapartie fond (75), et
une plaquette à circuits imprimés (81) portant l'électronique de commande du moteur électrique étant disposée à proximité du fond (83) de la partie (75),
**caractérisé en ce que**
le fond de la partie (75) du boîtier de régulateur (29) est tourné vers l'espace intermédiaire d'air (33) entre le boîtier moteur (9) et le boîtier de régulateur (29) et
que la face frontale (39) formée par le fond de la partie (75) tourné vers l'espace intermédiaire d'air (33) du boîtier de régulateur (29) est munie d'ailettes de refroidissement (41),
qui sont configurées en une pièce avec les ailettes de refroidissement (37) de la surface périphérique extérieure (35) et
dont la hauteur est plus faible que l'écart formé par l'espace intermédiaire d'air (33) entre le boîtier moteur (9) et le boîtier de régulateur (29).

2. Moteur électrique selon la revendication 1, **caractérisé en ce que** le flasque de palier (13) tourné vers l'espace intermédiaire d'air (33) présente un tourillon de palier (43) cylindrique creux sur lequel le boîtier de régulateur (29) peut être monté sans jeu à l'aide d'une bague de palier (45) réalisée en saillie par rapport à la surface frontale (39).

3. Moteur électrique selon la revendication 2, **caractérisé en ce que** le tourillon de palier (43) présente dans sa surface périphérique extérieure (47) un évidement de pourtour (49) destiné à l'encliquetage d'une bague d'étanchéité (53) coopérant avec la surface périphérique extérieure (51) de la bague de palier (45).

4. Moteur électrique selon la revendication 2 ou 3, **caractérisé en ce que** la surface frontale (55) du tourillon de palier (43) peut être placée en appui avec la face frontale (39) du boîtier de régulateur (29) lors de l'enfilage de la bague de palier (45).

5. Moteur électrique selon une des revendications précédentes, **caractérisé en ce que** la surface frontale (39) tournée vers l'espace intermédiaire d'air (33) du boîtier de régulateur (29) et le flasque de palier (13) tourné vers cet espace d'air (33) présentent des appendices (57, 59) de forme cylindrique, réalisés sous forme d'éléments d'espacement pouvant être reliés, avec des trous d'enfichage (61) ou des trous taraudés (63) destinés à des liaisons vissées (65).

6. Moteur électrique selon une des revendications précédentes, **caractérisé en ce que** dans le boîtier moteur (9) est monté en rotation un rotor (21) avec un arbre de rotor (19), dont les extrémités libres (23, 27) sortent des deux côtés hors du boîtier moteur (9), que la roue de ventilateur (3) avec un moyeu de ventilateur (25) est disposée rigidement sur une des extrémités libres (23) de l'arbre de rotor (19) et que l'autre extrémité libre (27) de l'arbre de rotor (19) pénètre dans le boîtier de régulateur (29) par un élément transducteur (69) susceptible d'être scruté par un capteur (67) en vue d'appréhender la vitesse de rotation.

7. Moteur électrique selon la revendication 6, **caractérisé en ce que** des ouvertures de passage (71, 73) destinées à l'élément transducteur (69) disposé sur l'arbre de rotor (19) sont disposées concentriquement par rapport au tourillon de palier (43) dans le flasque de palier (13), concentriquement par rapport à la bague de palier (45) dans la face frontale (39) du boîtier de régulateur (9).

8. Moteur électrique selon une des revendications 1 à 7, **caractérisé en ce que** le capteur (69) destiné à scruter le transducteur (67) de l'arbre de rotor (19) est disposé sur la plaquette de circuits imprimés (81).

9. Moteur électrique selon une des revendications précédentes, **caractérisé en ce que** la roue de ventilateur (3) est constituée d'une roue de ventilateur axiale dont les ailettes de ventilateur (85) couvrent le boîtier moteur cylindrique (9) au moins sur une partie de sa longueur axiale.

10. Moteur électrique selon une des revendications précédentes, **caractérisé en ce que** le boîtier moteur (9) est constitué d'une partie de boîtier enveloppe (87) dont les ouvertures frontales (89, 91) sont susceptibles d'être fermées de façon étanche au moyen respectivement d'un flasque de palier (11, 13), chaque fois équipé d'un palier (15, 17) destiné à l'arbre rotor (19).
